# EUROPEAN PATENT APPLICATION

(11) **EP 1 378 826 A1**
(43) Date of publication of application: **07.01.2004**
(21) Application number: 02014076.0
(22) Date of filing: 01.07.2002
(51) Int. Cl.: G06F 9/44

(54) **Filter network for data representation**

(71) Applicant: SUN MICROSYSTEMS, INC., Palo Alto, California 94303 (US)
(72) Inventor: Milcke, Björn A., D-22763 Hamburg (DE); Fischer, Andre W., D-22087 Hamburg (DE)
(74) Representative: HOFFMANN - EITLE

(57) **Abstract**

Method and data processing unit for flexibly representing data, including a filter network with a plurality of filter modules for receiving and processing at least part of source data received from an application data source. The processed source data are transmitted to a representation module, e.g. for visualization purposes. Source data may be identified and or modified based on trace events. The application data source, the individual elements of the filter network and the representation module may be distributed over a network of data processing devices.

## Description

### FIELD OF THE INVENTION

The present invention relates to a method and apparatus for visualizing data.

### BACKGROUND OF THE INVENTION

With continuously increasing processing capabilities of computing devices and increased proliferation of computers in offices and homes, computers became valuable assistants in nearly all application environments. For example, computer applications are widely used for text processing applications, spread sheet applications, imaging or video processing applications, engineering applications, scientific applications and similar.

In any of these above applications it may be desirable represent aspects or portions data handled by these applications or to represent any processing results. With increased processing capabilities, larger amounts of data can be processed, and in order to review processing results, it becomes more and more important to allow a flexible and adaptive representation, e.g. visualization of data. For example, it may be required to graphically visualize data as a bar chart, a pie chart, a toroidal chart, a multidimensional field and similar. Further, it may be required to display data by a combination of different display types in order to allow a quick and comprehensive overview of data or a processing result.

As upon the time of processing the data it may not always be known which kind of display is suited best to present the data, it may be required to rearrange a visualization of data or a processing result, e.g. by choosing a different display type, scaling, data range and similar.

Further it may be required to adapt a representation of a processing result to display characteristics of an available display unit. For example, it may be required to adapt a representation of a processing result to an available resolution of a display, an available size of a display, visualization capabilities of a display such a color and gray scale, and similar. As an example, a bar chart visualization of a processing result may require resizing a representation, if it is to be displayed on a small screen, such as a screen of a personal digital assistant or mobile phone.

Moreover, in a distributed environment such as a client server application, processing operations for visualizing data may partially take place at a server unit and at a client unit located remote from the server unit.

### SUMMARY OF THE INVENTION

It is therefore desirable to provide for a flexible and modular visualization of data, which can be adapted dynamically to a variety of different requirements.

According to an embodiment of the invention, a method for representing data includes: receiving a source data from an application data source at a filter network; processing the data using the filter network, the filter network including a plurality of filter modules, each for processing at least a portion of the source data; and providing the process source data to a data representation module. Providing a filter network with a plurality of filter modules allows a flexible and re-arrangeable processing scheme for adaptation to different data representation requirements.

The representation module may perform a visualization operation for displaying a processing result, e.g. as processed by the filter network. Thus, data may be graphically represented on a display unit, for ease of understanding of the data or a processing result, e.g. of a complex data structure.

The application data source may include a plurality of application data source components and/or the data representation module may include a plurality of data representation components. Accordingly, a plurality of different data sources may be concurrently processed in the filter network and/or represented using a group of representation components, e.g. for representing certain aspects of the processed data.

The application data source may provide the source data as a sequence of data sequences and a sequence of mappings. Accordingly, the data provided by the source may include not only the data to be represented, but also rules governing the representation.

The application data source may include an application specific interpreter, performing an application dependent processing of the data and forwarding the process data to the filter network; and the filter network may include a chart type specific interpreter performing an application independent processing of the data from the application data source. Accordingly, the filter network may be independent from characteristics of the data provided by the data source, for improved versatility of the filter network.

Further, requirements of a data representation module may be determined, and the filter network may process the data in accordance with the requirements. Accordingly, the filter network may actively determine characteristics of the representation module and perform an adapted processing of the data.

The filter network may include at least one first filter module connected to at least one second filter module, wherein the filter modules are dynamically arranged to form the filter network. Thus, for example a user may dynamically arrange a plurality of filter modules in the filter network, in order to achieve a customized processing and representation of the data.

Further, the filter modules may be arranged in a mesh with a first filter module receiving data from at least two second filter modules and/or may be arranged in a mesh with a first filter module transmitting data to at least two second filter modules. Thus, the filter module may have a grid like structure with the filter modules distributing and/or combining data.

A source combiner may be provided which combines data from a plurality of external source components and a data splitter may be arranged to split data received from the application data source combiner for different objects. Thus, before a processing takes place, a plurality of external source components may be combined to form a single data source and the data may be then split for different objects. This allows a flexible re-arrangement of data for processing. It is also possible that the data source combiner and the application data source splitter are formed by a single node, e.g. arranged within the filter network.

In order to identify an application data source, a first trace event may be transmitted from the data representation module to the filter network to identify data received at the data representation module; further, a second trace event may be sent from the filter network to the application data source; and at the application data source the data received at the representation module may be identified based on the trace events. Thus, for example a portion of the represented processed source data may be identified, in order to determine the corresponding portion of the source data.

A first filter module may transmit data to a second filter module and the second filter module may transmit a third trace event to the first filter module. Accordingly, trace events may be transmitted in a direction opposite to a data transmission direction, in order to for example pass trace events from the representation module through the individual filter module to the application data source.

Likewise, a trace event may be sent from the data source to the representation module, in order to identify source data at the representation module. Thus, e.g. a portion of source data may be marked and the corresponding portion of data at the representation module may be determined based thereon.

In a further embodiment modification command may be received at the data representation module; the modification command may be transmitted to the application data source; and the data provided by the application data source may be modified based on the modification command. This allows a modification of the application data source, e.g. a portion of data to be processed, based on a selection at the representation module. The modification command may be transmitted from the data representation module to the application data source through the filter network using trace events.

At least one of the filter modules may perform a mapping of data from a domain into a range. Further, range information may be determined from a data representation module and continuous data of the domain may be converted into discretized data based on the range information. This allows to appropriately scale source data in order to arrive at a meaningful representation of data.

Further, the processing of the data in a filter module may include at least one of the group consisting of: - projection operations on portions of the data; - generalization operations; - calculation operations on data; and - mathematical functions.

Further, the representation module may be arranged at a client unit in communication with the data processing device. Thus, a processing of the data may be performed by the filter network arranged at a remote location, whereas the representation of the processed data takes place at a client unit.

Still further, at least part of the filter network may be located at a client unit. Thus, the filter network may be distributed over a plurality of data processing devices including, e.g., a client unit. For example, parts of the filter network with high computational requirements may be located at the server unit, whereas filter network components with low processing requirements may be located at the client unit.

Further, a program may be provided having instructions adapted to cause data processing means to carry out at least one of the above operations. Further, a computer readable medium may be provided, in which a program is embodied, where the program is to make a computer execute at least one of the above operations. Still further, a computer program may comprise the computer readable medium.

According to another embodiment, a data processing unit for representing data may include: communication means for receiving data from an application data source; a filter network for processing the data, the filter network including a plurality of filter modules, each for processing at least a portion of the source data; and wherein communication means is adapted to provide the process data to a data representation module.

According to another embodiment, a client unit may be provided for communicate with the above data processing unit and may include at least one representation module for receiving the process data from the filter network.

Further embodiments of the invention are disclosed in further claims.

### BRIEF DESCRIPTION OF THE DRAWINGS

- Fig. 1: shows an arrangement of elements for representing data according to an embodiment of the invention;
- Fig. 2: illustrates a sequence of operations for representing data according to an embodiment of the invention;
- Fig. 3: illustrates elements for representing data according to another embodiment of the invention, particularly outlining an arrangement with a plurality of source components and a plurality of representation components;
- Fig. 4: illustrates elements for representing data according to another embodiment of the invention, particularly outlining an arrangement of filter module in a filter network;
- Fig. 5: illustrates elements for representing data according to another embodiment of the invention, particularly showing a further example of filter modules of a filter network;
- Fig. 6: illustrates elements for representing data according to another embodiment of the invention, showing a plurality of source components, a mesh of filter modules and a plurality of representation components;
- Fig. 7: illustrates elements for representing data according to another embodiment of the invention, particularly illustrating a data source combiner and a data source splitter;
- Fig. 8: shows elements for representing data according to another embodiment of the invention, particularly outlining the flow of trace events from the data representation module to the application data source;
- Fig. 9: shows a flow of operations for representing data according to another embodiment of the invention, particularly outlining a flow of trace events for identifying a source data;
- Fig. 10: shows a sequence of operations for representing data according to another embodiment of the invention, particularly illustrating modifying an application data source;
- Fig. 11: shows elements for representing data according to another embodiment of the invention, particularly showing a flow of trace events from an application data source to a data representation module for identifying data in a data representation; and
- Fig. 12: shows components of a network environment for representing data according to another embodiment of the invention.

### DETAILED DESCRIPTION OF THE PREFERED EMBODIMENTS

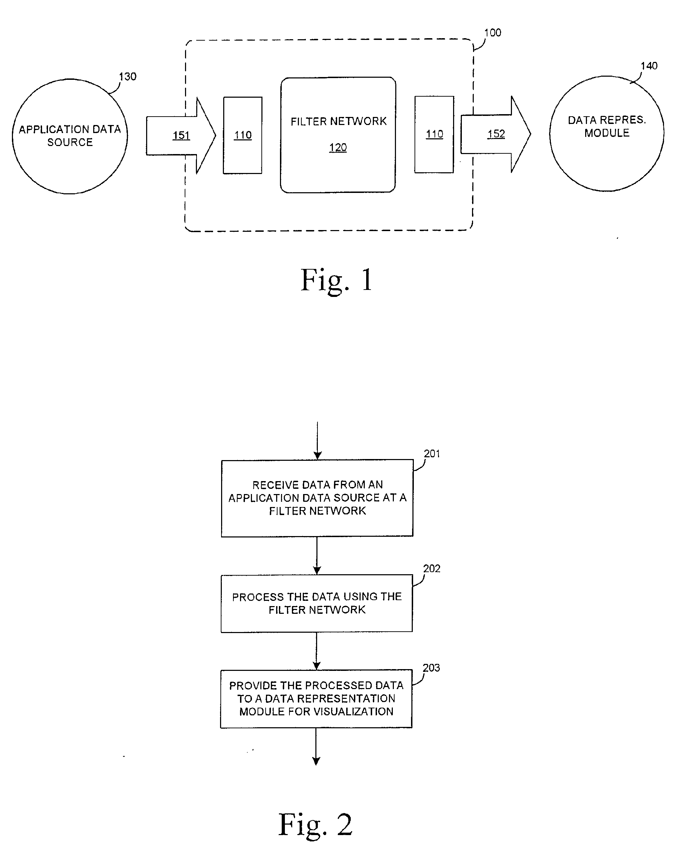

In the following an embodiment of the invention will be described with respect to Fig. 1

Fig. 1 schematically illustrates an arrangement for representing data including a data processing unit 100 including communication means 110 for receiving data from an application data source 130. A filter network 120 is provided for processing the data received from the application data source, the filter network including a plurality of filter modules, each for processing at least a portion of the source data. Further, the communication means 110 is adapted to provide the processed data from the filter network to a data representation module 140.

By providing a modular arrangement of the application data source, the filter network and the data representation module, a flexible and adaptable processing and representation of data becomes possible. Generally, the application data source may provide any kind of data for processing. The data representation module may perform any kind of visualization operation, e.g. displaying the data. Alternatively or further thereto the representation module may perform storage operations with regard to the data received from the filter network or may transfer data to further locations.

The filter network may be dynamically arranged based on a plurality of filter modules, in order to perform a desired filter operation or a sequence of filter operations. The individual filter modules process at least a part of the data received from the application data source so that a selection of a portion of aspect of data which should be considered can be made upon or after designing the filter network.

The source data from the application data source are transmitted to the communication means 110 of the data processing unit 100 as indicated by an arrow 151. Further, the data processed by the filter network are transmitted from the filter network to the data representation module 140 through the communication means 110, as indicated by an arrow 152. The communication means may perform a simple forwarding operation, or may process the data according to any known communication protocol.

In Fig. 1 the data processing unit 100 is shown to include the communication means 110 and the filter network 120. Alternatively, the data processing unit 100 may also include the application data source 130 and/or the data representation module 140. Thus, the entire arrangement shown in Fig. 1 may be realized at a single data processing device, e.g. as an application including capabilities for graphical representation of data executed on a general purpose data processing device. As outlined above, such an application may include spreadsheet applications, imaging or video processing applications, scientific applications and similar. The application may be able to graphically visualize data as a bar chart, a pie chart, a toroidal chart, and a multidimensional field or similar. Further, a combination of above display types is possible.

In a further alternative the data processing unit may only include the filter network and communicate with the application data source and the data representation module through external communication means. Still further, the data processing unit 100 may include only parts of the filter network, other parts of the filter network being located at further data processing units in communication with the data processing unit 100. This allows to flexibly and dynamically arrange the elements shown in Fig. 1 on one or a plurality of data processing devices.

A communication between the individual elements could be accomplished through any kind of communication means including dedicated lines and/or communication networks such as packet switched networks.

In the following examples of the elements shown in Fig. 1 will be outlined in further detail. It is noted that the following description contains examples for illustration purposes only and should not be construed as limiting the invention.

First, examples of the data processing unit 100 will be outlined in further detail.

The data processing unit 100 may be a general data processing device such as a personal computer. Further, the data processing unit may be constituted by other kinds of data processing devices such as a computing device with large capacity e.g. a server. Alternatively or further thereto, the data processing device 100 may include processing devices such as a mobile computing device, a personal digital assistant, a personal communication device including mobile phones and similar.

The filter network 120 may be located at the data processing unit 100 and may be constituted by a sequence of software instructions for execution on a central processing element or a dedicated processing element of the data processing unit 100. Further, the filter network may be realized at least partially in hardware, e.g. for increasing a processing speed in complex filter applications. Further thereto, parts of the filter network may be located at external devices, e.g. devices having larger processing capabilities for executing a portion of the filter operations that are computationally expensive.

The filter network may include a plurality of filter modules, at least some of which may be realized as a sequence of coded instruction for execution on a processor, or may be realized at least partially in hardware, as outlined above.

Filter operations executed by the filter modules may include for example projection operations from a domain into a range, on portions of data received from the application data source. This may include arranging or re-arranging at least parts of the application data received from the application data source in preparation of a representation of the data at the data representation module.

Filter operations executed by the filter modules may further include generalization operations such as operations for generalizing a data from the data source for facilitating a representation of the processed data. For example, a generalization may take into account a representation capability of the representation module, e.g. to reduce an amount of data to be processed to a degree which is satisfactory for a representation, e.g. to a degree of a representation limitation such as a display resolution limitation.

The processing operations of the filter modules may also include the execution of display characteristic dependent operations, e.g. in dependence on a display or representation element available at the data representation module. For example, the source data may be rearranged in view of a size of a display, or other factors such as color, brightness and similar may be adjusted for adaptation to an available display. For example, while a larger CRT may not require a resizing or adaptation of a representation, a mobile phone with a small black and white display may require a resizing of a data representation.

The filter modules may perform calculation operations on a data, e.g. based on processing rules in preparation of representing the data at the data representation module.

Still further, the data processing modules may perform mathematical functions on the source data, e.g. as required in any statistical, mathematical or other processing of data prior to representation.

Individual filter modules may be specifically adapted to perform one of the above outlined types of operations such that dedicated filter modules may be provided for arrangement in the filter network. Thus, a filter network with the required capabilities can be constructed based on filter modules having specific processing capabilities. The filter network may then execute one or a combination of the above outlined operations. Furthermore, a filter module may be capable of performing different types of the above outlined operations.

The communication means 110 may use internal communication paths, e.g. a system bus, of the data processing unit 110 if the application data source and/or the data representation module are arranged within the data processing unit. Alternatively, the communication means 110 may be adapted to communicate with an externally located application data source and/or data representation module. This may involve any kind of communication link such as dedicated communication lines, computer networks, wireless communication links or combinations thereof. Communications may also involve the Internet.

The communication means 110, receiving data from the application data source, may directly forward the data to the filter network 120 and likewise, the communication means 110 may forward the process data from the filter network to the data representation module. This may involve appropriately routing the data to the filter network and any other operations necessary to making the source data available at the filter network and making the processed data available at the data representation module. Further, the communication means may be adapted to perform a re-arrangement of the source data from the application data source, e.g. an analogue/digital conversion of data before processing at the filter network and/or a digital/analogue conversion of the processed data before representation at the data representation module. For example, the application data source could be an analogue data source requiring digitization prior to processing at the filter network. Likewise, if the data representation module is capable of displaying analogue data only, the communication means may provide a required analogue representation of the data of the filter network.

In the following examples of an application data source will be outlined in further detail.

The application data source 130 may generally include any kind of data source, either digital or analogue, which needs to be processed and displayed at a data representation module. This may involve data available from any kind of sensor, or data available based on any kinds of measurements in an application environment or similar. The application data source may be providing a continuous stream of data, e.g. based on a real-time measurement of data, or may provide data stored beforehand based on a sampling operation. For example, the source data may be provided in a digital data format, such as a data file or a stream of digital information serial or parallel form.

Besides sequences of data sequences to be processed, the application data source may also provide a sequence of mappings. The sequence of mappings may indicate which kind of data arrangement or re-arrangement should be performed at the filter network. For example, a mapping may involve transferring data from a domain into a range. This may include that each value of the domain including source data is mapped to a value of a desired range.

Thus, the application data source may provide information on suitable re-arrangements of the data, thus facilitating interpretation of the data e.g. by a user.

Alternatively, the application data source may only provide a sequence of data, in which case all processing operations including interpretation and re-arrangement of data is performed based on rules defined on the level of the filter network or data representation module.

In the following, examples of the data representation module 140 are outlined in further detail.

The data representation module may be a sequence of instructions for execution on a processor and may involve storing the processed data received from the filter network. Further, the data representation module may be arranged to display the received processed data, e.g. on a display unit such as a CRT or any other screen.

The data representation module may be arranged external to the data processing unit 100, as shown in Fig. 1, however, the data representation module may form an integral part of the data processing unit 100. The data representation module may present the processed data on a display and/or perform further processing operations on the data. For example, data received from the filter network may be represented as pie charts, bar charts or any other kind of chart. A chart in this connection may generally be any kind of representation format of data. In many cases, due to the two-dimensional nature of a display, a chart may be a two-dimensional display of source data, such as a histogram or similar. However, a chart may also include a one dimensional or three-dimensional representation of data. A chart is not limited to any kind of representation, as long as the chart facilitates an understanding of the data from the data source.

As outlined before, the data representation module may be arranged at an external location, e.g. at a client unit in communication with the data processing unit 100. In this case a user operating the client unit may control the application data source and/or filter network at the data processing unit 100 from the client unit, and processing results are displayed via the data representation module at the client unit.

As an example, an application data source may be a spreadsheet application. The source data provided by the spreadsheet application could be values stored at the individual locations of the spreadsheet. For example, the values could represent financial data or any other kind of data such as temperature data or similar.

The spreadsheet application may be arranged to provide the source data to the filter network via the communication means 110. The filter network 120 will then process the spreadsheet data as desired. For example, projection operations on at least a portion of the source data could be carried out, in order to re-arrange the spreadsheet data. Further, for example if the spreadsheet contains a very large number of values, generalization operations or sub-sampling operations could be carried out by the filter network, in order to reduce the amount of data to be processed. Further, the filter network could perform calculation operations on the data, such as scaling the data or similar. Still further, the filter network could perform a mathematical operation on the data, e.g. combining values, averaging values of the spreadsheet and similar. The filter network may include a plurality of individual filter modules, each one for performing a defined task on the source data. The filter modules may be arranged in a grid like structure, in a serial structure or any other form.

The processing result from the filter network 120, e.g., the processed values from the spreadsheet applications are then provided through the communication means 110 to the data representation module 140. The data representation module 140 could perform a storing operation on the data for a later use or could generate a graphical representation of the data on a screen. For example, based on the processing operations carried out by the filter network, the processed spreadsheet values could be represented in bar charts, pie charts, 3D-fields and similar. While the data representation module may be arranged to simply display data received from the filter network, the data representation module may also be arranged to perform a further processing on the data, e.g. in dependence on a display characteristic of a display screen or window on a display screen available to the representation module.

In the following a further embodiment of the invention will be described with respect to Fig. 2.

Fig. 2 shows operations for representing data according to another embodiment of the invention. The operation shown in Fig. 2 can be carried out using the arrangement of Fig. 1, however, Fig. 2 is not limited thereto.

In a first operation 201 a filter network such as the filter network 120 shown in Fig. 1 receives data from an application data source. The application data source may be any kind of data source providing analogue and/or digital data, serial or parallel, for a representation at a data representation module, such as data representation module 140 shown in Fig. 1. The data from the data source may be received through communication means, such as communication means 110 shown in Fig. 1, associated with the filter network.

The filter network and the communication means may be arranged at a data processing unit, such as the data processing unit 100 shown in Fig. 1. Alternatively, the communication means and the filter network may be distributed over a plurality of data processing devices, e.g. connected via a computer network such as a local area network or a wide are network, e.g. the Internet. The application data source may form part of the data processing unit, however, it is also possible that the application data source is located at an external location, e.g. in a remote from the data processing unit. In this case the source data may be transmitted from the application data source to the communication means via a communication link, such as outlined above. The communication link may include computer networks, dedicated communication lines, wireless communications and similar. The application data source, as mentioned above may be any kind of data source such as a spreadsheet application or a scientific application or any other kind of application providing data for representation.

As an example, the data provided by the data source may be a sequence of data sequences, wherein the data sequences can be in array of floating-point numbers, an array of strings or an array including both floating-point numbers and an array of strings.

Further, the data source may provide a sequence of mappings. For an application-specific data source, the mappings may be defined as suggestions, on how data could be read.

Accordingly, the application data source may provide data and mappings, the mappings being suggestions for a treatment of the data.

Thus, the application data source may provide an application-specific interpretation of data. For example, a spreadsheet could be considered with 4 columns and 20.000 rows that contain numbers. An interpreter could then create a sequence of 4 series each containing 20.000 values or 20.000 series each containing 4 values. Generally, the first interpretation could be considered better than the second, because 4 representations will be obtained instead of 20.000 that are difficult to distinguish and comprehend. Accordingly, an application-specific interpretation of the data could suggest a treatment of the spreadsheet data in 4 data sequences of 20.000 numbers each.

Nevertheless, if for example pie- or donut-charts are used, this straightforward or suggested interpretation of the data may pose a problem. In a pie chart it could be preferred to have many series with only a single value. Further, for a donut-chart it could be preferable to provide many series each with only some values, later corresponding to the rings. This is due to the fact that it is desirable to have a small number of rings while the number of segments per ring may be somewhat larger. Accordingly, if a data representation should invoke a donut-chart, it may be advantageous not to follow the suggestion of the application data specific interpretation but to perform a data representation specific interpretation of data. The data representation application-specific interpretation of the data would, in case of a donut-chart, select in the above spreadsheet example a representation of 20.000 series each containing 4 values.

Thus, while the application data source specific interpretation may provide a first suggestion for interpreting the data, e.g., a default interpretation suggestion, a representation specific interpretation may overrule the suggestion on the basis of requirements of a representation form, such as a donut-chart outlined above.

The application data source specific interpretation of the data, i.e. the above suggestion for interpreting the data may be included in the mappings received from the application data source. A filter module of the filter network or a specialized component may perform a data representation specific interpretation of the data, e.g. based on information received from the representation module.

However, it is also possible that in case of an absence of mappings from the application data source, that a filter module or other component performs an analysis of the source data, in order to arrive at a suggestion for interpretation. For example, rules could be established to treat by default two-dimensional arrays of numbers in dependence on the dimensions of the array. The smaller dimension of the array could be used to determine a number of sequences, and the larger dimension could be used to define the links of the individual sequences. Accordingly, the above spreadsheet application example with 20.000 rows and 4 columns, an interpretation suggestion could establish 4 sequences of 20.000 values each.

After operation 201, in an operation 202 the source data received from the data source are processed using the filter network, such as the filter network 120 shown in Fig. 1. The filter network may consist of a plurality of filter modules for processing at least a portion of the source data. Thus, the filter network may process a desired portion of the source data, e.g. by performing projection operations, generalization operations, calculation operations, mathematical functions and similar, as outlined above.

The application data source may include an application specific interpreter for performing an application dependent processing of the data and forwarding the processed data to the filter network. Thus, the filter network may perform an application independent processing of the received data.

Alternatively or further thereto the filter network may include a chart type specific interpreter performing an application independent processing of the data from the application data source. The chart type specific interpreter may include means for determining requirements of data representation module and the filter network may process the data in accordance with the requirements. Requirements may be the characteristics of a representation module, such as display size, resolution, color capability and similar.

If the filter network is distributed over a plurality of data processing devices, e.g. at least one filter module being arranged at each individual processing device of the plurality of processing devices, the filter module may exchange data and mapping information through communication links, e.g. a computer network, as outlined above.

After the processing operations, in an operation 203 the process data are presented to the data representation module, such as the data representation module 140 shown in Fig. 1, e.g. for storage, forwarding or visualization purposes.

The data representation module may be realized as an integral part of the data processing unit 100. In this case the process data from the filter network may be transmitted by the communication means 110 through an internal communication line. The process data may be stored in a memory associated with the data processing unit and may thereafter be retrieved by the data representation module, e.g. for visualization or further processing of the data.

Alternatively, the data representation module may be arranged at an external location of the data processing unit, e.g. at another data processing device and the process data from the filter network may be transmitted to the data representation module via an external communication link such as a computer network, a dedicated communication line including wireless communications, as outlined above.

For example, the data representation module may be located at a client unit in communication with the data processing unit including at least part of the filter network and functioning as a server. In this case a user at the client unit may control the processing at the filter network, e.g. may arrange individual filter modules for processing the source data. Further, the user may control the application data source, e.g. the spreadsheet application, which also may be located at the data processing unit constituting a server communication with the client unit. Processing results from the filter network may then be received at the data representation module located at the client unit for local storage, display or further processing.

The embodiment outlined with regards to Fig. 2 allows a flexible arrangement of the individual components for representing data and a dynamic structuring of the filter network for various application scenarios.

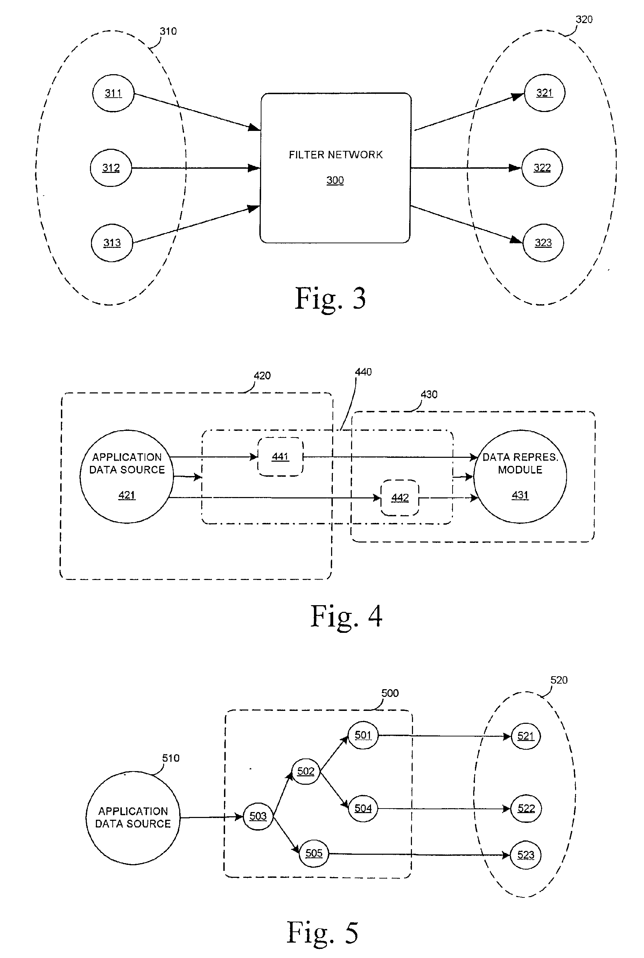

In the following a further embodiment of the invention will be described with respect to Fig. 3.

Fig. 3 shows an arrangement for representing data according to another embodiment of the invention. Fig. 3 particularly illustrates further examples of the application data source and of the data representation module.

Fig. 3 shows an application data source 310 including, as an example, three application data source components, 311, 312 and 313. Further, Fig. 3 shows a data representation module 320 including, as an example, three data representation components 321, 322 and 323. It is noted, that an arbitrary number of application data source components and an arbitrary number of data representation components may be provided.

Further, Fig. 3 shows a filter network 300, e.g. similar to the filter network shown in Fig. 1.

Each of the application data source components 311, 312 and 313 provides source data to the filter network, and the filter network is arranged to process at least part of the source data received from the plurality of application data source components.

For example, the application data source components could each represent an application providing data for representation, such as spreadsheet applications, scientific applications and similar. Thus, the filter network allows combining the data from the individual data sources and process the data for representation. The source data received from the plurality of application data source components may have any kind of format, analogue, digital or combinations thereof. For example, one of the application data source components could provide analogue data, and others may provide digital data. The digital data may be floating-point numbers, or have any other format known in the art. Further, each of the application data source components may provide mappings, e.g. as suggestions on how the source data may be interpreted.

The filter network, as in the previous embodiments, preferably includes a plurality of filter modules for processing at least part of the source data received from the individual application data source components.

Further, the filter network provides data for representation at the individual data representation components 321, 322 and 323. The data representation components may each be responsible for representing one aspect of the processed data, e.g. may be arranged to store or display a portion of the processed data. Further, the data representation components may provide different representations of the same portion or the entirety of the processed data. For example, the data representation modules 321 could provide a bar chart type representation, the data representation component 322 could provide a donut type representation, etc.

Accordingly, the embodiment shown in Fig. 3 may process source data from a plurality of application data source components and may display different aspects or portions of the processed data at a plurality of data representation components. The modularity of the present embodiment allows improved flexibility in arranging the individual components.

The element shown in Fig. 3 may, similar to the previous embodiments, be located at a single data processing unit such as the data processing unit 100 shown in Fig. 1, or at a plurality of data processing devices in communication with one another.

The data representation components could be associated with a plurality of display units or could be associated with windows on one or a plurality of display units.

In the following a further embodiment of the invention will be described with respect to Fig. 4.

Fig. 4 illustrates elements of an arrangement for representation of data according to another embodiment of the invention, particularly outlining a distribution of the individual elements over a client and a server.

Fig. 4 shows a server unit denoted 420 and a client unit denoted 430. The server unit may be for example a data processing device having large capacity, for providing services to a large number of users, each operating a client unit.

The client unit 430 may be a client data processing device such as a general purpose computer, a laptop computer, a palmtop computer, a personal digital assistant, a communication device such as a mobile phone and similar. The client unit may be used to access and control a service application executed at the server unit for 20. For example, a service application available at the server unit 430 may be a spreadsheet application controlled by a user operating the client unit for 30. For example, the user could enter data into the individual fields of the spreadsheet application or load previously stored spreadsheets into the spreadsheet application, or could retrieve spreadsheets from external locations. While the processing operations related to the spreadsheet application may be mainly located at the server unit 420, a display of the individual spreadsheets and control menus, and similar for controlling the spreadsheet application at the server unit, may be displayed at the client unit for 30. Alternatively, parts of the spreadsheet application may also be located at the client unit. However, as the client unit may be a small device, it may be desirable to locate the majority of the components of the spreadsheet application at the server unit 420. Only computation at the less expensive components of the spreadsheet application could be located at the client unit 430.

If the above example data of a spreadsheet should be for example graphically visualized, the spreadsheet application could constitute an application data source 421 shown in Fig. 4.

It is noted that the above constitutes an example only in that any other kind of application requiring a data representation could be considered.

Fig. 4 further shows a data representation module 431, e.g. for representing or displaying data received from the application data source. The data representation module 431 is located at the client unit 430, e.g. for a local display of processing results.

Further, Fig. 4 shows a filter network 440, e.g. similar to the filter networks outlined with respect to previous embodiments.

The filter network 440 may be partially located at the server unit 420 and partially located at the client unit 430. That is, individual filter modules of the filter network may be located at the server unit, and some of the filter modules of the filter network may be located at the client unit. Preferably, computationally expensive filter components are located at the server unit, whereas filter modules requiring less complex operations may be located at the client unit.

However, alternatively, as illustrated at reference number 441, the entire filter network may be located at the server unit or, alternatively, as illustrated at a reference numeral 442, the entire filter network may be located at the client unit.

It was outlined before that the client unit 430 may be one of a number of different types of devices. Thus, it may be preferred that a processing or rearrangement of the processed data from the filter network in dependence on a display or storage capability available at the client unit is performed at the client unit. For example, a filter module of the filter network located at the client unit may perform a display dependent processing operation, depending on the display characteristics of a display available at the client unit. Alternatively, the data representation module 431 at the client unit could also perform the display-dependent operations.

Accordingly, the server unit could perform a client display independent processing of the source data from the application data source, and an adaptation of the processing result to client characteristics could be performed at the client unit 430 for a client-dependent representation of the data, e.g. storage or display.

Alternatively, however, it is also possible that the client-dependent processing of the source data is entirely performed at the server unit.

While the application data source 421 is shown as comprised by the server unit 420, it is also possible that the application data source is arranged at an external location, as outlined before. Further, even though the data representation module is shown as part of the client unit 430, it is possible that the data representation module 431 is located at an external location, as outlined with respect to previous embodiments.

The embodiment described with respect to Fig. 4 illustrates how the individual elements for representing data may be arranged in a client and server scenario, allowing further flexibility and facilitating applications for representing data.

Moreover, filter operations requiring large processing capability may be executed at the server unit, whereas processing operations requiring less processing capabilities or processing operations being dependent on a specific type of client unit, could be executed at the client unit. E.g., a server unit may be arranged to run an application for graphic visualization of data at a plurality of client units. Users at the client units could be enabled to individually control execution of an instance of the visualization application at the server unit, and the individual processing results could be displayed at a display screen associated with the respective client units. In this case it will be necessary to adapt the representation of the respective processing results to the characteristics of the display screens associated with the individual client units.

In the following a further embodiment of the invention will be outlined with respect to Fig. 5.

Fig. 5 shows elements of an arrangement for representing data, particularly illustrating an example of the filter network.

Fig. 5 shows a filter network 500 including a plurality of filter modules 501, 502, 503, 504 and 505. Further, Fig. 5 shows an application data source 510, e.g. as outlined with respect to previous embodiments. Still further, Fig. 5 shows a data representation module including a plurality of data representation components 521, 522 and 523, such as outlined with respect to previous embodiments.

In general, the filter network may include a plurality of filter modules arranged in series or in any other kind of network or mesh configuration. If for example the filter modules are arranged in series, data received from the application data source at the first filter module of the series of filter modules is processed and the processing result is transferred to the second filter module of the series of filter modules. After a sequential processing of the data, the last filter module of the series of filter modules transfers the processed data to the data representation module for storage or visualization purposes, or similar.

Alternatively or further thereto, as shown in Fig. 5, it is the filter modules may be arranged such that data processed by one of the filter modules is received at a plurality of subsequent filter modules. In the present case, filter module 503 receives data from the application data source and after processing of at least a portion of the source data, the processing result is transferred to the filter modules 502 and 505. The filter module 503 may transmit identical data to the filter modules 502 and 505, or may transmit different portions of the processed data to the filter modules 502 and 505.

The filter module 505 then further processes the data received from the filter module 503 and transfers the processing result to a data representation component 523.

The filter module 502 processes the data received from the filter module 503 and forwards the processing result to the filter modules 501 and 504. Again, the filter module 502 may forward identical "copies" of the data to the filter modules 501 and 504 or may transfer different portions e.g. overlapping or non-overlapping, to the filter modules 501 and 504.

The filter module 501 then further processes the received data and transfers the processing result to a data representation component 521.

The filter module 504 processes the data received from the filter module 502 and forwards the processing result to the data representation component 522.

In general, the individual filter modules may be constituted by sequences of coded instructions for execution on a processor. Objects may constitute the filter modules, e.g. defined in programming languages as known in the art, such as C, C++ for any other programming language.

The filter modules may be selected and arranged to form the filter network through user interaction, e.g. using a graphical user interface allowing to arrange and connect the individual filter modules, as desired. This allows a dynamical arrangement and rearrangement of the filter network on demand, e.g. if representation characteristics are not satisfactory.

Further, the data representation components may be arranged by a user, similarly to arranging the filter modules. Characteristics of the data representation components may be specified by a user, e.g. size of a display, resolution and similar, were may be automatically be determined based on display characteristics.

In the following examples of filter modules will be outlined in further detail.

Generally, filter modules may perform any kind of operation on at least portions of the data received from the application data source or from another filter module of the filter network. These general operations on at least portions of the data may depend on mappings provided from the application data source of a preceding filter module, or may depend on characteristics of a data representation module or data representation component. Requirements of a data representation module may be determined or reported by a selected data representation module or data representation component for allowing a data representation specific processing of the data from the application data source. The filter network may carry out the processing of the data in accordance with the determined requirements or, more specifically, may be carried out by at least one of the filter modules.

Further, a filter module may perform a mapping of elements in a domain, provided by the data source, into a range. The mapping may be always total, i.e., each value of the domain may be mapped onto a value of the range. Further, if one or both of the domain and the range of values have a finite number of available discrete values, the mapping may include averaging operations or sub-sampling operations. In particular, if a display resolution of a representation module is limited, it may not be necessary to process all available source data, it rather may be sufficient, if a selected sub-group of the available values is processed.

The domain as well as the range of values may have any finite dimension. An example with a large number of dimensions involved is an ellipsoid-chart, i.e. a bubble-type chart, where bubbles can be in a three-dimensional space and where the bubbles are three-dimensional ellipsoids. Then, the mapping would involve going from a three-dimensional space with the coordinates with a bubble's position into another three-dimensions space with the three radii of the ellipsoid.

Further, if a discrete or smaller number of values in one of the dimensions is available, this dimension could be used for displaying an array of smaller representation with one dimension less in their domain. For example, a time sequence of three-dimensional measurements may thus be represented by a sequence of two-dimensional representations, with one for each time instance.

Filter modules may also operate on continuous data, for example in a case where a data source provides an infinite number of measurements or, more general, observations. However, a representation of the data will in usually be always limited to a finite number of values for representation. For example a sine is defined for an infinite number of values, however, only a finite number of values can usually be displayed or represented.

A filter module may thus be arranged to discretize the continuous function or continuous flow of data based on characteristics of the filter network and/or the data representation module. For example, knowledge about the range of an access of a display and/or a screen resolution may be used to generate a sequence of values serving as a domain for the filter network. Thus, the data representation may care about the data, which it is supposed to receive. For example, an available output range of a data representation module may determine a sampling of a continuous signal, or may determine generation of an equidistant distribution of domain values. However, it is also possible to divide a specialized data representation module allowing a non-equidistant distribution of domain values, if special features of a data source should be considered, such as if the main interest of source data lies within a small portion of the available range of the source data.

Further, as outlined before, filter modules may perform an application specific interpretation of data based on information received from the application data source or based on values derived from the characteristics of the received data. Still further, a filter module may realize projection operations, e.g. for representing two-dimensional arrays of data as one-dimensional arrays. In general, projection filters can filter more than one series out of a two-dimensional array or, more generally, filter any array with a first dimension out of a source array having a second dimension, the second dimension being larger than the first dimension.

Still further, filter modules may perform generalisation operations for reducing available data such that computational requirements are reduced while a representation still resembling a representation based on the entire source data. In general, generalisation filters may perform filter operations to represent data in a required range.

Filter modules may also perform calculation operations, e.g. a regression for tuples in a scatter chart. For example, in a spreadsheet table a projection filter may retrieve tuples (x, y) for one series. In an example, a linear regression filter is applied to this projection filter that reads all data and calculates a regression curve. The output may then be an array of three tuples, a first containing the first point of the line, a second containing the last point of the line and a third containing the regression parameters.

In a further example, calculation filters provide parsing operations that parse mathematical expressions and construct a set of filters which in turn produce calculated values for a formula described in the parsed expression. E.g., a filter can be considered to receive an array of ordinates (x-values) and return in an array of equal size that contains the sign of each value.

In further examples, filter modules perform combination operations for combining values of the source data. For example, a curve representing the mean value of two different data series is generated by using a filter that has two input sources that provide data for the series, and the output could be one series with the respective mean value.

In the embodiment shown in Fig. 5, as already indicated in previous embodiments, the filter modules may be located at a single data processing unit or may be distributed over a plurality of data processing units. In this case, communications between the individual filter modules on different data processing units could take place by any kind of communication link, e.g. a dedicated communication line, a communication network, e.g. a package switched communication network or similar. Communications could be established using event messages exchanged between the individual filter modules. The event messages could either contain a data or mappings or further information on processing the data.

Still further, the application data source and/or the data representation module including the data representation components 521, 522 and 523 may be arranged at the single data processing unit or at further processing units. Thus, a flexible arrangement of the individual elements of the arrangement shown in Fig. 5 is possible.

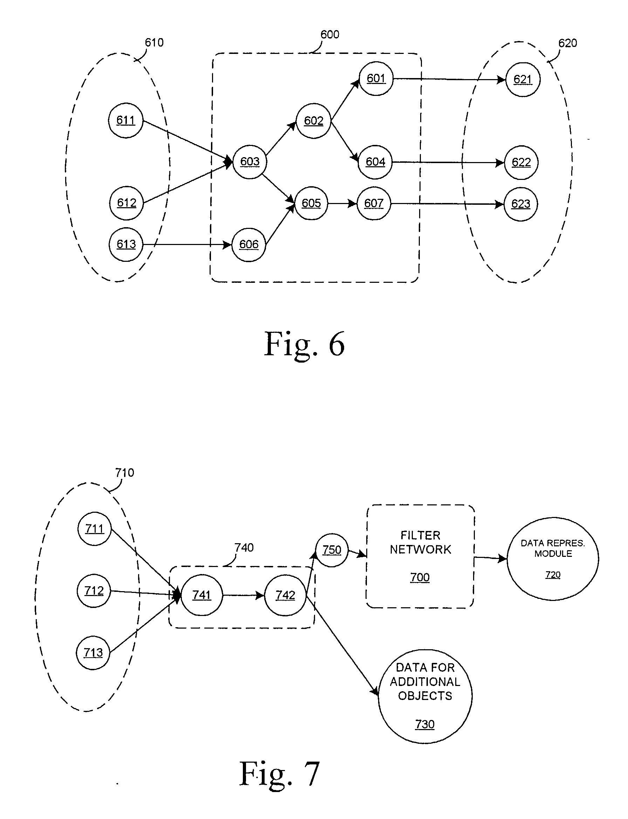

In the following a further embodiment of the invention will be described with respect to Fig. 6.

Fig. 6 shows elements of an arrangement for representing data, particularly outlining further examples of a filter network, an application data source and a data representation module.

In general, a data source may provide part of data directly to a data representation module and/or may route at least part of the source data through a filter network.

Fig. 6 shows an example of a filter network 600, including filter modules 601, 602, 603, 604, 605, 606 and 607. Further, Fig. 6 shows an application data source 610 including application data source components 611, 612 and 613. Still further, Fig. 6 shows a data representation module 620 including data representation modules 621, 622 and 623.

Further to the features shown in Fig. 5, the example of Fig. 6 illustrates a case, where data from two filter modules are combined by another filter module. And, Fig. 6 illustrates an example, where data from two application data source components are received and processed at a single filter module.

More specifically, in Fig. 6 a data source component 611 and data source component 612 both supply data to filter module 603. For example, the filter module 603 could combine the data or parts of the data received from the data source components 611 and 612 by averaging data arrays, or by any other calculation or mathematical operation on the data received, as outlined with respect to previous embodiments.

Further, Fig. 6 shows a filter module 606 receiving data from the data source component 613. Both the filter modules 603 and 606 provide data to filter module 605, which processes the data and which, after further processing at filter module 607 are provided to the data representation component 623. Further, the data processed by filter module 603 are supplied to a filter module 602 for processing the received data and providing the processing result or different portions thereof to the filter modules 601 and 604. After processing at the filter modules, the result is provided to the data representation components 621 and 622, respectively.

It is noted that the embodiment shown in Fig. 5 and Fig. 6 constitute examples only and that further filter arrangements and an arbitrary number of filter modules are possible. Moreover, a filter module may combine data received from an arbitrary number of data source components and/or filter modules and, a filter module may provide data to at least one further filter module and/or at least one data representation component. The individual filter modules and/or application data source components and/or data representation components may be arranged dynamically, e.g. interactively by a user, until a suitable representation result is achieved.

In the following, a further embodiment of the invention will be outlined with respect to Fig. 7. Fig. 7 illustrates elements of an arrangement for representing data, further outlining elements for combining and splitting data.

Fig. 7, similar to the previous embodiments, illustrates an application data source 710, including source components 711, 712 and 713. While three application data source components are shown, it again is understood that an arbitrary number of application data source components may be provided.

Further, Fig. 7 illustrates a filter network including a plurality of filter modules for processing at least a portion of received data, the filter network being denoted with a reference numeral 700. The processed data are provided to a data representation module 720, e.g. as outlined with respect to previous embodiments. Still further, Fig. 7 shows a data source combiner 741 to combine data from a plurality of external source components, in the present case data source components 711, 712 and 713. Fig. 7 also illustrates a data splitter 742 to split data received from the application data source combiner to different further processing elements. In the present case the data splitter 742 provides data to a root node 750 providing data to the filter network 700. Further, the data splitter 742 provides data to additional objects denoted 730 in Fig. 7. The additional object may be any elements for further processing a portion of the data, e.g. for displaying title lines, information on the source data and similar.

Providing a data source combiner and a data source splitter allows simplifying the filter network, as each data representation may be provided with an underlying tree-structure of filter modules for retrieving the data. In the previous embodiments, it was shown that a filter network is not necessarily a tree but may also be a mesh or any other network arrangement. However, it may be desired in some application environments to provide a tree of filter modules, as in this case the data representation module may be provided with knowledge about the data source from some defined point on. If every data representation component has an underlying tree structure for retrieving data, less information shared between filter modules is necessary.

Thus, the data source combiner may merge all data sources or data source components that supply source data for the data representation module to one node. Based on this now available complete basis of source data, the data source splitter may split the data to create more than one data representation or to separate data sequences.

While possibly introducing some redundancy, the concept of data source combiner and data source splitter allows a more intuitive handling of data and thus may be advantageous for ease of use in some applications.

In the present example, the data splitter 742 provides the data or at least part of the data from the data source combiner to the root node 750, forming a root node for the filter network 700. The network 700 may then provide a single or a plurality of pathways of data through filter modules to the data representation module, which may include a plurality of data representation components.

Further, the data splitter provides at least portions of the data from the data source combiner to additional objects 730, e.g. for further applications or further processing of information contained in the source data.

If data for additional objects is not required, the data splitter 742 may be omitted, as in this case the data source combiner provides data only to the route note 750.

In an alternative, the data source combiner 741 and the data splitter 742 may be combined to form a single node 740, in order to reduce the number of levels in the arrangement for representing data.

The embodiment outlined with respect to Fig. 7 allows a more structured handling of data from a plurality of data source components and thus simplifies use of the arrangement for representing data.

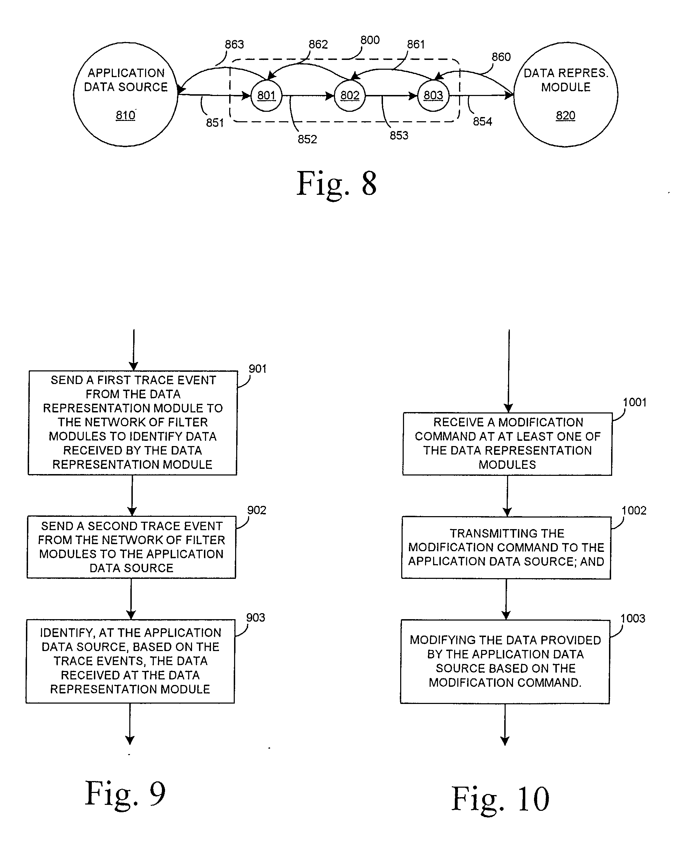

In the following a further embodiment of the invention will be described with respect to Fig. 8.

Fig. 8 illustrates elements of an arrangement for representing data according to another embodiment of the invention, particularly outlining a communication between the individual elements.

Fig. 8 illustrates an application data source 820, e.g. as outlined with respect to previous embodiments. Further, Fig. 8 illustrates a filter network 800 including a plurality of filter modules 801, 802 and 803, e.g. as outlined with respect to previous embodiments.

Still further, Fig. 8 illustrates a data representation module 820, also as for example outlined with respect to previous embodiments.

Information is generally sent from the application data source to the data representation module, i.e., from the data source to the data sink. This transfer of source data and, if applicable, mappings, is indicated by arrows 851, 852, 853 and 854, illustrating a flow of information from the application data source 810 through the filter modules 801, 802 and 803 to the data representation module 820. Each of the filter modules may process at least part of the received data and forward at least part of the processed data. Thus, an information flow between the data source and the representation module is established.

However, it may be desired to also transfer information from the data representation module in direction toward the application data source, e.g. in order to find original sources of a data representation, or to perform a modification operation on the data source or source data.

In order to perform an application data source identification or an application data source modification, events, in the following referred to as trace events, may be used. For example, a first trace event may be sent from the data representation module 820 to the filter network 800, to identify data received by the data representation module. In one example, if the trance event is generated by a representation module, a trace event may constitute or include a message with information on that particular portion of the data received at the representation module, on which the representation or a selected portion of the representation generated at the data representation module is based upon, i.e. that particular portion of the data received at the representation module which forms part of the actual representation or alternatively a portion the representation. A portion of the actual representation may for example be selected by a user identifying the portion of interest on a display, e.g. using a mouse and cursor or via any other input device.

Further, a second trace event may be sent from the filter network to the application data source 810 and, at the application data source, based on the first and second trace event, the data received at the representation module may be identified. In one example, if the trance event is generated by a filter module, a trace event is a message including information on the portion of the data received at the filter module on which the data identified in a trace event received e.g. from the representation module or another filter module is based upon. For example, if the filter operation is a calculation operation, then that particular portion of the data received at the filter module which affects the calculation result with regard to the data identified in the trace event from the representation or other filter module will be identified in the trace event.

For example, a spreadsheet application and a representation module displaying a chart of an arbitrary array of values of a spreadsheet is considered. In this case trace events may advantageously be used to identify a region in the spreadsheet forming bases of the chart of the representation module. For example, a user could mark a part of the representation chart and, based on the trace events, the original source data, i.e. values in the array of the spreadsheet, may identified and correspondingly marked. For example, values may be highlighted in the array of the spreadsheet or may be marked by any other means.

In order to be able to trace the represented data back to the data source, the individual filter modules of the filter network may be arranged to transmit or forward trace events through preceding filter modules towards the application data source. In the present example, the data representation module transmits a trace event to filter module 803 as illustrated by an arrow 860. Further, the filter module 803 transmits a trace event as illustrated by arrow 861 to the filter module 802. And, the filter module 802 transmits a trace event to the filter module 801, as illustrated by an arrow 862. Finally, the filter module 801 transmits a trace event to the application data source 810, as illustrated by an arrow 863.

At the respective filter modules the trace events may trigger an identification of any received and/or processed and/or forwarded data. Further, the respective filter module could then include this information into a further trace event to be forwarded to yet another filter module located "closer" to the data source.

Identifying an original source of a data representation may be advantageous, as this allows to selectively modify representation components that depend on a particular piece of source data. In a practical example, a user could select data displayed at the representation module, e.g. by simply clicking on a data representation displayed in a data representation module or component using a graphical user interface. The underlying source data could then be identified through using trace events transmitted from the representation module component towards the application data source.

Alternatively or further thereto it may be desired to also modify the source data.

In order to perform an application data source modification, modification commands included or encapsulated in events, can be transmitted from the representation module 820 through the filter network and the filter modules 801, 802 and 803 to the application data source 810. Instead of simply marking the source data underlying a representation, it could be allowed to modify the corresponding source data based on the modification command transmitted backwards to the filter network. In one example the modification command includes information on a desired 'shape' of the representation. For example, a user could modify the height of a bar in a bar chart and the modification command could include information on the desired change of the bar to allow a corresponding modification of the underlying data.

The modification command may be transmitted from the data representation module to the application data source through the filter network using trace events. In an example, a trace event in connection with a modification command could include in formation on the portion of the data shown in the representation requiring change and on the corresponding extent of changes. If for example a bar in a bar chart is to be raised by the extent of three units, the trace event will identify the portion of the data received at the representation module forming the basis of the bar and will further include information on a required modification of this portion of the data to achieve the raise of the bar by three units. Similarly, a filter module of the filter network will receive the trace event and in turn identify the portion of the data received at the filter module and forming basis of the data indicated in the trace event. Further, the filter module will generate a further trace event to be transmitted in direction of the data source including at least the identified portion of the data and required modification of this portion of the data to achieve the modification required by the received trace event. Based on a last trace event received at the data source, the data source may then modify the source data.

In order to avoid an unintended modification of data, a modification confirmation could be requested.

In the following a further embodiment of the application will be outlined with respect to Fig. 9.

Fig. 9 shows operations particularly for identifying data in a data source according to another embodiment of the invention. The operations shown in Fig. 9 may be executed by the arrangement shown in Fig. 8, however, Fig. 9 is not limited thereto.

In a first operation 901 a first trace event is transmitted from the data representation module 820 to the filter network, to identify data received by data representation module820. This first trace event, such as the trace event illustrated by arrow 860 may include information on data represented at the representation module and/or a instruction to identify data at the filter module, such as filter module 803 shown in Fig. 8, being transmitted to the data representation module.

Based on the result of this identification, in an operation 902 a second trace event may be transmitted through the filter network, i.e. through the filter modules towards the application data source, as outlined before.

At the application data source, in an operation 903 the data received at the representation module may be identified.

The trace event generated in operation 901 may be created using a graphical user interface, e.g. a user marking data in a representation or clicking on a representation associated with a representation module.

In the following, a further embodiment of the invention will be outlined with respect to Fig. 10. Fig. 10 shows operations for modifying a data source. The operations shown in Fig. 10 may be carried out using the arrangement shown in Fig. 8, however, Fig. 10 is not limited thereto.

In a first operation 1001 a modification command may be received at at least one of the data representation modules. The modification command may be generated using a graphical user interface, or by any other means. For example, a user could mark a portion or the entirety of the data represented at the representation module and indicate a desired change to the data shown at the representation module.

Thereafter, the modification command is transmitted to the application data source in an operation 1002, e.g. using trace events, as outlined before. For example, a plurality of trace events may be transmitted through the filter network, as illustrated with arrows 860, 861, 862 and 863 in Fig. 8.

In an operation 1003 the data provided by the application data source may then be modified based on the modification command received at the application data source.

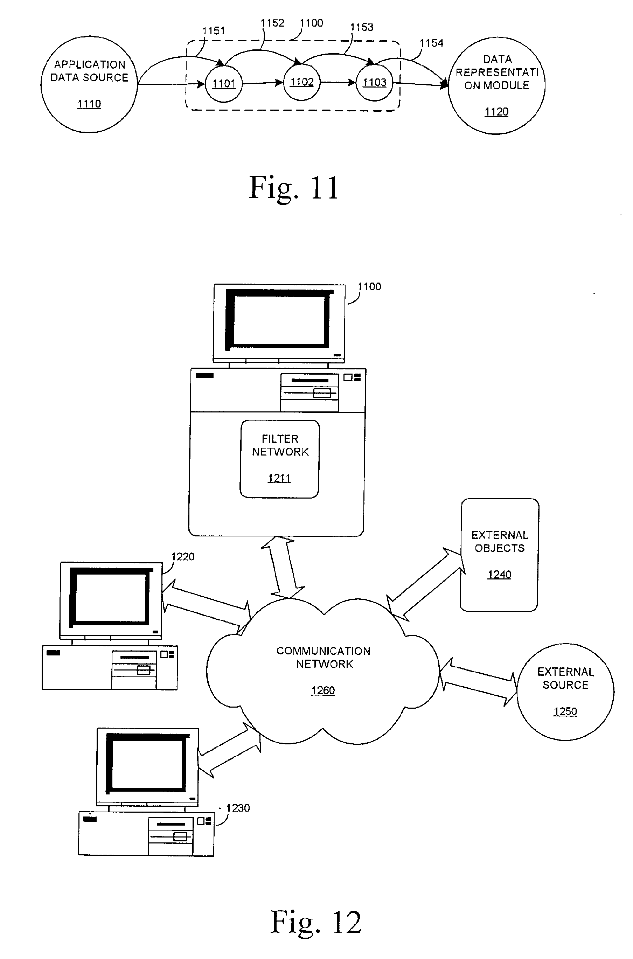

In the following a further embodiment of the invention will be described with respect to Fig. 11.

Fig. 11 shows elements of a further arrangement for representing data, particularly outlining an identification of data at a representation module based on source data.

The concept of trace events outlined with respect to Fig. 8 may also be applied in the forward direction, i.e., in a direction from the application data source towards the data representation module. Thus, trace events may be transmitted from the data source to the representation module to identify source data at the representation module.

Fig. 11 illustrates an application data source 1110 transmitting source data to a filter network 1100, the filter network including a plurality of filter modules 1101, 1102 and 1103. A processing result of the filter network 1100 is transmitted from the filter module 1103 to a data representation module 1120. The flow of information from the application data source to the data representation module through the filter network may be as outlined with respect to previous embodiments.

Further, even though a linear arrangement of three filter modules is shown, it is understood that any other arrangement of any number of filter modules may be used.

Further to the flow of source data from the application data source through the filter network to the data representation module, trace events may be transmitted from the application data source towards the data representation module through the filter modules, as illustrated by arrows 1151, 1152, 1153 and 1154. The trace events allow to identify a data representation at a data representation module or data representation component.

In the example of a spreadsheet application, a user could for example using a graphical user interface, identify parts of a source data array at the application data source, and based on the trace events, a data representation module, component or parts of a data representation could be identified and correspondingly marked.

The trace event could include information about which portion of the source data leads to a representation at the representation module or component. For example, in a simple mapping operation of source data, there could be one-to-one correspondence of source values to values represented at the representation module.

Further, if a transformation such as a time domain frequency domain transformation is performed, a single value of the application data source corresponds to all values at the data representation module.

Similar to the embodiment described with respect to Fig. 8, the embodiment shown in Fig. 11 allows to identify correspondences between source data and representation data.

In the following a further embodiment of the invention will be described with respect to Fig. 12.

Fig. 12 shows elements of a system for representing data according to another embodiment of the invention. Fig. 12 particularly illustrates a network environment for representing data using a plurality of data processing devices.

Fig. 12 specifically shows a server unit 1210, for example such as the server unit outlined with respect to Fig. 4. Further, Fig. 12 illustrates two exemplary client units 1220 and 1230, e.g. also as outlined with respect to Fig. 4. The client units and the server unit communicate through a communication network 1260, such as a local communication network or a wide area communication network, e.g. the Internet. The client units may be general-purpose data processing devices, e.g. desktop computers, laptop computers, personal digital assistants or communication devices such as mobile phones.

The server unit may be a data processing device or a network of data processing devices having large capacity for serving a large number of users. As described before, the server unit 1210 may be arranged to provide services to a plurality of users accessing and controlling service applications located at the server unit. In the present example, the server unit 1210 comprises a filter network 1211 for processing data received from an application data source, as described with respect to previous embodiments.

The application data source may be arranged internally at the server unit 1210 or may be an external data source such as shown at reference numeral 1250. Still further, it is possible that the data source is located at a client unit, and data from the data source may be transmitted to the filter network 1211 through the communication network 1260. The filter network 1211 processes the data received from the external data source or sources, e.g. as outlined with respect to previous embodiments.

Processing results are then transmitted to a data representation module, e.g. located at one of the client units. Further, data may also be transmitted to external objects, as shown at a reference numeral 1240.

It is understood that users at either one or both of the client units could launch one instance of the above outlined service application, including one instance of the filter network, data sources, external objects and similar. Further, the client units also allow controlling the instance of the application, e.g. allow arranging the filter network, the data sources and similar, as it was outlined with respect to previous embodiments.

Still further, while in Fig. 12 the filter network is shown as located at the server unit, in further examples the filter network may be distributed over further data processing devices including the client units, as outlined with respect to Fig. 4.

It is noted that a program or programs may be provided having instructions adapted to cause a data processing device or a network of data processing devices to realize elements of the above embodiments and to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment, a data processing unit for representing data may have the following characteristics.
1) Data processing unit for representing data, including:
   a code section having instructions adapted to receive data from an application data source;
   a filter network for processing the data, the filter network including a plurality of filter modules, constituted by code sections having instructions adapted to for processing at least a portion of the source data; and
   a code section having instructions adapted to provide the processed data to a data representation module.
2) Data processing unit of 1) wherein the representation module includes a code section having instructions adapted to visualize a processing result.
3) Data processing unit of 1) including a code section having instructions adapted to receive data as a sequence of data sequences and a sequence of mappings.
4) Data processing unit of 1) wherein
   the application data source includes an application specific interpreter including a code section having instructions for an application dependent processing of the data and for forwarding the processed data to the filter network; and
   the filter network includes a chart type specific interpreter including a code section having instructions for an application independent processing of the data from the application data source.
5) Data processing unit of 1) including a code section having instructions adapted to determine requirements of a data representation module and wherein the filter network includes a code section having instructions adapted to to process the data in accordance with the requirements.
6) Data processing unit of 1) including a code section having instructions adapted to combine data from a plurality of external source components.
7) Data processing unit of 1) including a code section having instructions adapted to split data received from the application data source combiner for different objects.
8) Data processing unit of 1) including
   a code section having instructions adapted to send a first trace event from the data representation module to the filter network, to identify data received by the data representation module;
   the filter network including a code section having instructions adapted to send a second trace event from the filter network to the application data source; and
   including a code section having instructions adapted to identify, based on the trace events, the data received at the data representation module.
9) Data processing unit of 1) wherein a first filter module includes a code section having instructions adapted to transmit data to a second filter module and the second filter module includes a code section having instructions adapted to transmit a third trace event to the first filter module.
10) Data processing unit of 1) wherein the application data source includes a code section having instructions adapted to send a trace event from the data source to the representation module, to identify source data at the data representation module.
11) Data processing unit of 1) wherein the data representation module includes a code section having instructions adapted to receive a modification command and to transmit the modification command to the application data source; and to modify the data provided by the application data source based on the modification command.
12) Method of 11) wherein a data representation modules includes a code section having instructions adapted to transmit the modification command from the data representation module to the application data source through the filter network using trace events.
13) Data processing unit of 1) wherein at least one of the filter modules includes a code section having instructions for mapping of data from a domain into a range.
14) Data processing unit of 1) including a code section having instructions to determine range information from a data representation module and to convert continuous data of the domain into discretized data based on the range information.
15) Data processing unit of 1) wherein a filter module includes a code section having instructions to perform at least one of the group consisting of:
   - projection operations on portions of the data;
   - generalisation operations;
   - display characteristic dependent operations;
   - calculation operations on data; and
   - mathematical functions.
   According to another embodiment, a client unit for representing data may have the following characteristics.
16) Client unit for communicating with the data processing unit according to 1) including at least one representation module including a code section having instructions to receive the processed data from the filter network.
17) Client unit of 16) including a second filter network including a code section having instructions to receive the processed data from the filter network of 1) to process the received data and to provide the processing result to the at least one representation module.
18. Client unit of 16) wherein at least one of the representation module and the second filter network include a code section having instructions for a display dependent processing operation.
19) Client unit of 16) wherein the data processing unit and the client unit include code sections having instructions to communicate through events.

## Claims

1. Method for representing data, including:
receiving source data from an application data source at a filter network;
processing the data using the filter network, the filter network including a plurality of filter modules, each for processing at least a portion of the source data; and
providing the processed source data to a data representation module.

2. Method of claim 1 wherein the representation module performs a visualization operation for displaying a processing result.

3. Method of one of the preceding claims wherein the application data source includes a plurality of application data source components.

4. Method of one of the preceding claims wherein the data representation module includes a plurality of data representation components.

5. Method of one of the preceding claims wherein the application data source provides the source data as a sequence of data sequences and a sequence of mappings.

6. Method of one of the preceding claims wherein
the application data source includes an application specific interpreter performing an application dependent processing of the data and forwarding the processed data to the filter network; and
the filter network includes a chart type specific interpreter performing an application independent processing of the data from the application data source.

7. Method of one of the preceding claims including determining requirements of data representation module and wherein the filter network processes the data in accordance with the requirements.

8. Method of one of the preceding claims wherein the filter network includes at least one first filter module connected to at least one second filter module, the filter modules being dynamically arranged to form the filter network.

9. Method of one of the preceding claims wherein the filter modules are arranged in a mesh with a first filter module receiving data from at least two second filter modules.

10. Method of one of the preceding claims wherein the filter modules are arranged in a mesh with a first filter module transmitting data to at least two second filter modules.

11. Method of one of the preceding claims wherein a source combiner combines data from a plurality of external source components.

12. Method of one of the preceding claims wherein a data splitter splits data received from the application data source combiner for different objects.

13. Method of one of the preceding claims wherein the application data source combiner and the application data source splitter are formed by a single node.

14. Method of one of the preceding claims including
sending a first trace event from the data representation module to the filter network, to identify data received by the data representation module;
sending a second trace event from the filter network to the application data source; and
identifying, at the application data source, based on the trace events, the data received at the data representation module.

15. Method of one of the preceding claims wherein a first filter module transmits data to a second filter module and the second filter module transmits a third trace event to the first filter module.

16. Method of one of the preceding claims including sending a trace event from the data source to the representation module, to identify source data at the data representation module.

17. Method of one of the preceding claims including
receiving a modification command at the data representation module;
transmitting the modification command to the application data source; and
modifying the data provided by the application data source based on the modification command.

18. Method of claim 17 wherein the modification command is transmitted from the data representation modules to the application data source through the filter network using trace events.

19. Method of one of the preceding claims wherein at least one of the filter modules performs a mapping of data from a domain into a range.

20. Method of one of the preceding claims including determining range information from a data representation module and converting continuous data of the domain into discretized data based on the range information.

21. Method of one of the preceding claims wherein processing the data in a filter module includes at least one of the group consisting of:
- projection operations on portions of the data;
- generalisation operations;
- calculation operations on data; and
- mathematical functions.

22. Method of one of the preceding claims wherein the representation module is arranged at a client unit in communication with the data processing device.

23. Method of one of the preceding claims wherein at least part of the filter network is located at a client unit.

24. A program having instructions adapted to cause data processing means to carry out the method of at least one of the claims 1 - 23.

25. A computer readable medium, in which a program is embodied, where the program is to make a computer execute the method of at least one of the claims 1 - 23.

26. A computer program product comprising the computer readable medium according to claim 24.

27. Data processing unit for representing data, including:
communication means for receiving data from an application data source;
a filter network for processing the data, the filter network including a plurality of filter modules, each for processing at least a portion of the source data; and
wherein the communication means is adapted to provide the processed data to a data representation module.

28. Data processing unit of claim 27 wherein the representation module performs a visualization operation for displaying a processing result.

29. Data processing unit of claim 27 or 28 wherein the application data source includes a plurality of application data source components.

30. Data processing unit of at least one of the claims 27 to 29 wherein the data representation module includes a plurality of data representation components.

31. Data processing unit of at least one of the claims 27 to 30 wherein the communication means is adapted to receive data as a sequence of data sequences and a sequence of mappings.

32. Data processing unit of at least one of the claims 27 to 31 wherein
the application data source includes an application specific interpreter performing an application dependent processing of the data and forwarding the processed data to the filter network; and
the filter network includes a chart type specific interpreter performing an application independent processing of the data from the application data source.

33. Data processing unit of at least one of the claims 27 to 32 including means for determining requirements of a data representation module and wherein the filter network is adapted to process the data in accordance with the requirements.

34. Data processing unit of at least one of the claims 27 to 33 wherein the filter network includes at least one first filter module connected to at least one second filter module, the filter modules being dynamically arranged to form the filter network.

35. Data processing unit of at least one of the claims 27 to 34 wherein the filter modules are arranged in a mesh with a first filter module receiving data from at least two second filter modules.

36. Data processing unit of at least one of the claims 27 to 35 wherein the filter modules are arranged in a mesh with a first filter module transmitting data to at least two second filter modules.

37. Data processing unit of at least one of the claims 27 to 36 including a source combiner to combine data from a plurality of external source components.

38. Data processing unit of at least one of the claims 27 to 37 including a data splitter to split data received from the application data source combiner for different objects.

39. Data processing unit of at least one of the claims 27 to 38 wherein the application data source combiner and the application data source splitter are formed by a single node.

40. Data processing unit of at least one of the claims 27 to 39 wherein
the representation module is adapted to send a first trace event from the data representation module to the filter network, to identify data received by the data representation module;
the filter network is adapted to send a second trace event from the filter network to the application data source; and
the application data source is adapted to identify, based on the trace events, the data received at the data representation module.

41. Data processing unit of at least one of the claims 27 to 40 wherein a first filter module is adapted to transmit data to a second filter module and the second filter module is adapted to transmit a third trace event to the first filter module.

42. Data processing unit of at least one of the claims 27 to 41 wherein the application data source is adapted to send a trace event from the data source to the representation module, to identify source data at the data representation module.

43. Data processing unit of at least one of the claims 27 to 42 wherein the data representation module is adapted to receive a modification command and to transmit the modification command to the application data source; and to modify the data provided by the application data source based on the modification command.

44. Method of claim 43 wherein a data representation modules is adapted to transmit the modification command from the data representation module to the application data source through the filter network using trace events.

45. Data processing unit of at least one of the claims 27 to 44 wherein at least one of the filter modules is adapted to perform a mapping of data from a domain into a range.

46. Data processing unit of at least one of the claims 27 to 45 including means to determine range information from a data representation module and converting continuous data of the domain into discretized data based on the range information.

47. Data processing unit of at least one of the claims 27 to 46 wherein a filter module is adapted to perform a processing including at least one of the group consisting of:
- projection operations on portions of the data;
- generalisation operations;
- display characteristic dependent operations;
- calculation operations on data; and
- mathematical functions.

48. Client unit for communicating with the data processing unit according to at least one of the claims 27 - 47, including at least one representation module for receiving the processed data from the filter network.

49. Client unit of claim 40, including a second filter network for receiving the processed data from the filter network of at least one of the claims 27 - 48, for processing the received data and for providing the processing result to the at least one representation module.

50. Client unit of claim 41, wherein at least one of the representation module and the second filter network performs a display dependent processing operation.

51. Client unit of at least one of the claims 49 - 51, wherein the data processing unit and the client unit are arranged to communicate through events.
